# EUROPÄISCHE PATENTSCHRIFT

(11) **EP 2 161 094 B1**
(45) Veröffentlichungstag und Bekanntmachung des Hinweises auf die Patenterteilung: **01.08.2012**
(21) Anmeldenummer: 08015739.9
(22) Anmeldetag: 05.09.2008
(51) Int. Cl.: B23K 9/025, B23K 26/08, B21C 37/08, B23K 26/26, B21D 43/02, B21D 43/00

(54) **Vorrichtung und Verfahren zum Bearbeiten, insbesondere Schweissen, eines längs durch die Vorrichtung transportierten Profils**
Device and method for processing, in particular welding, a profile transported lengthways through the device
Dispositif et procédé de traitement, en particulier de soudage, d'un profilé transporté longitudinalement le log du dispositif

(43) Veröffentlichungstag der Anmeldung: 10.03.2010
(73) Patentinhaber: DREISTERN GmbH & Co.KG, 79650 Schopfheim (DE)
(72) Erfinder: Greiner, Jürgen, DE - 79650 Schopfheim (DE)
(74) Vertreter: Lemcke, Brommer & Partner

(56) Entgegenhaltungen:
- EP-A- 1 375 053
- DE-B- 1 032 807
- US-A1- 2001 020 609

## Beschreibung

Die Erfindung betrifft eine Vorrichtung zum Bearbeiten eines längs durch die Vorrichtung transportierten Profils mit den Merkmalen des Oberbegriffs des Anspruchs 1 sowie ein entsprechendes Verfahren mit den Merkmalen des Oberbegriffs des Anspruchs 9 (siehe, z.B., EP-A-1 375 053).

Eine Bearbeitungsvorrichtung der vorliegenden Art umfasst demnach Transportelemente zum Transport eines Profils durch die Bearbeitungsvorrichtung, wobei die Profilbewegung in Intervallen von einer Produktionsgeschwindigkeit bis zum Stillstand des Profils abgebremst und danach wieder auf die Produktionsgeschwindigkeit beschleunigt wird. Mindestens ein Bearbeitungsmittel wirkt an einem Bearbeitungspunkt auf das Profil ein, um mittels einer Relativbewegung zwischen dem Bearbeitungspunkt und dem Profil ein kontinuierlich entlang des Profils verlaufendes Arbeitsergebnis herzustellen. Der Ort des Bearbeitungspunkts ist hierbei entlang der Richtung der Profilbewegung vor und zurück bewegbar.

Solche Bearbeitungsvorrichtungen für Profile und Verfahren zum Betreiben derselben werden üblicherweise im Rahmen von Profilieranlagen eingesetzt, in denen Metallbänder beim Durchlaufen einer Mehrzahl von in Linie angeordneten Rollformwerkzeugen stufenweise zu Profilen umgeformt werden. Es können offene, oder beispielsweise in Form eines Rohrs vorliegende, geschlossene Profile entstehen. Eine in der Produktionslinie der Profilieranlage angeordnete, den Rollformwerkzeugen üblicherweise nachgeschaltete, als Schweißvorrichtung ausgebildete Bearbeitungsvorrichtung ermöglicht beispielsweise, überlappende oder aneinanderstoßende Bereiche des Profils, beispielsweise zur Herstellung eines Rohrs, oder auch zwei oder mehrere verschiedene Profile längs miteinander zu verschweißen.

Da es sich bei Profilieranlagen, in deren Rahmen die vorliegende Bearbeitungsvorrichtung üblicherweise eingesetzt wird, um kontinuierlich arbeitende Anlagen handelt, und hierbei Profile in einer Länge erzeugt werden, die der Länge des als Ausgangsmaterial verwendeten Metallbandes entspricht, müssen fertige oder weiterverarbeitungsfähige Profilstücke abgelängt werden, was eine entsprechende Trennmaschine erforderlich macht. Diese Trennmaschine muss entweder mitlaufend ausgebildet sein, d.h. sie wird zum Ablängen des Profilstücks auf die Transportgeschwindigkeit des Profils beschleunigt sowie nach dem Schnitt abgebremst und wieder in ihre Ausgangsposition zurückgeführt, oder aber die Profilieranlage ist mit einer Steuerung versehen, die den Transport des Profils in Intervallen stoppt, um anschießend wieder anzulaufen. Während des Stillstandes des Profils kann eine stationäre Trenneinrichtung das Ablängen der fertigen Profilstücke übernehmen.

Eine Profilieranlage, bei der das Profil in Intervallen bis zum Stillstand abgebremst wird, ermöglicht darüber hinaus, beispielsweise eine Stanzmaschine in die Produktionslinie zu integrieren, um die Profile noch vor dem Ablängen, und gegebenenfalls sogar zwischen einzelnen Umformschritten, mit Stanzungen oder dergleichen zu versehen.

Das Abbremsen des Profils von der Produktionsgeschwindigkeit bis zum Stillstand sowie das anschließende Beschleunigen benötigt jeweils eine gewisse Zeit, in der das Profil eine gewisse Transportstrecke weitertransportiert wird. Dies stellt Bearbeitungsvorrichtungen der vorliegenden Art, die ein kontinuierlich entlang des Profils verlaufendes Arbeitsergebnis herstellen sollen, vor eine anspruchsvolle Aufgabe. Denn als solche Bearbeitungsvorrichtungen kommen insbesondere Schweißvorrichtungen, Fräsvorrichtungen, Sprühvorrichtungen, Hobelvorrichtungen, Glühvorrichtungen, Lackiervorrichtungen etc. in Frage, welchen gemein ist, dass sie einen kontinuierlichen Bearbeitungsprozess ausführen, wie das Sprühen von Lack, das Herstellen einer Schweißnaht usw. Da ein besonders bevorzugtes Anwendungsgebiet der vorliegenden Erfindung beim Längsverschweißen von Profilen in einer Schweißvorrichtung liegt, soll in der folgenden Beschreibung beispielhaft lediglich eine solche Schweißvorrichtung beschrieben werden. Es sei jedoch angemerkt, dass sich die vorliegende Erfindung nicht auf eine Schweißvorrichtung beschränkt, sondern alle kontinuierlichen Bearbeitungsvorrichtungen für Profile umfasst.

Die Schweißenergie, die am Schweißpunkt in das Profilmaterial eingebracht wird, steigt bei konstant bleibender Schweißleistung und langsamer werdender Profilgeschwindigkeit naturgemäß an. Dies kann je nach verwendeter Schweißtechnik nicht immer mit befriedigenden Ergebnissen durch Herunterregeln der Schweißleistung ausgeglichen werden. Hinzu kommt, dass die Schweißleistung unterhalb einer von der Schweißtechnik abhängigen Schwellengeschwindigkeit der Profilbewegung ganz ausgeschaltet werden muss, um das Material nicht lokal zu zerstören. Bis zum vollständigen Stillstand des Profils legt dieses jedoch noch eine kurze Restwegstrecke zurück. Wenn nach dem Wiederanlaufen der Profilbewegung und Überschreiten der Schwellengeschwindigkeit die Schweißleistung wieder eingeschaltet wird, verbleibt eine Lücke in der Schweißnaht. Darüber hinaus können in denjenigen Phasen, in denen die Schweißenergie heruntergeregelt werden muss, zuweilen ungleichmäßige Schweißnähte entstehen.

In der US-A-2001/020609 ist eine Schweißvorrichtung der eingangs genannten Art offenbart, in der ein periodisch entlang des Profils vor- und zurückbewegbarer Schweißkopf verwendet wird, um die Relativgeschwindigkeit zwischen dem Schweißkopf und dem Profil periodisch zu verringern, so dass sich in diesen Bewegungsphasen eine höhere mögliche Vorschubgeschwindigkeit oder eine geringere erforderliche Schweißenergiemenge ergibt. Nach diesem Stand der Technik werden bevorzugt zwei solche periodisch vor- und zurückbewegbaren Schweißköpfe verwendet, so dass sich zwei Steppschweißnähte ergeben. Zweckmäßigerweise sind die periodischen Bewegungen der beiden Schweißköpfe hierbei um π phasenverschoben.

Um das Problem der Lücken in den Schweißnähten zu beseitigen, ist in der EP-A-1 375 053 vorgeschlagen worden, eine Schweißvorrichtung der eingangs genannten Art solcherart zu betreiben, dass beim Abbremsen des Profils unter die Schwellengeschwindigkeit zwar wie bisher die Schweißleistung ausgeschaltet wird, dass dann jedoch der Ort des Schweißpunkts beim Stillstand des Profils von einem Ausgangspunkt aus in Transportrichtung des Profils bewegt wird. Wenn nach dem Wiederanlaufen der Profilbewegung beim Überschreiten der Schwellengeschwindigkeit die Schweißleistung wieder eingeschaltet wird, ist der Schweißpunkt darin also in Transportrichtung, zum Ende der unterbrochenen Schweißnaht hin, verschoben, so dass die im Endeffekt verbleibende schweißnahtfreie Strecke verkleinert oder sogar eliminiert ist. Während des nachfolgenden normalen Schweißvorgangs wird der Ort des Schweißpünkts entgegen der Transportrichtung des Profils an die Ausgangsposition zurückbewegt, um beim nächsten Stillstand des Profils in ausgeschaltetem Zustand wiederum in Transportrichtung bewegt werden zu können.

Das Abschalten und Wiedereinschalten der Schweißleistung ist für die Qualität der herzustellenden Schweißnaht allerdings nicht optimal; ein kontinuierliches Durchschweißen wäre unter diesem Aspekt wünschenswert. Ferner ist der Regelungsaufwand für die eingebrachte Schweißenergie bei diesem bekannten Verfahren recht hoch, wenn keine ungleichmäßigen Schweißnähte in Kauf genommen werden sollen. Ferner kann dann, wenn Profile mit kurzen Intervallen gefertigt werden, also das Profil nur jeweils relativ kurz mit Produktionsgeschwindigkeit durch die Schweißvorrichtung transportiert wird, die dann gegebene Notwendigkeit, den Ort des Schweißpunkts sehr schnell an die Ausgangsposition zurückzubewegen, eine unvorteilhaft niedrige Produktionsgeschwindigkeit erzwingen. Denn da die Rückbewegung des Schweißpunktes während des Schweißvorgangs erfolgt, wird hierdurch die Relativgeschwindigkeit zwischen dem Schweißpunkt und dem Profil zusätzlich erhöht, so dass eine maximale Schweißgeschwindigkeit, oberhalb der die Schweißleistung nicht mehr tief genug in das Material eindringen kann, um so früher erreicht wird.

Ausgehend von diesem Stand der Technik liegt der vorliegenden Erfindung die Aufgabe zugrunde, eine Bearbeitungsvorrichtung und ein Verfahren zum Bearbeiten eines längs durch die Vorrichtung transportierten Profils vorzuschlagen, mit denen die oben genannten Probleme verringert bzw. beseitigt werden.

Gelöst ist diese Aufgabe durch eine Bearbeitungsvorrichtung mit den Merkmalen des Anspruchs 1 bzw. durch ein Verfahren mit den Merkmalen des Anspruchs 9. Bevorzugte Ausgestaltungen der erfindungsgemäßen Bearbeitungsvorrichtung finden sich in den Ansprüchen 2 bis 8; bevorzugte Weiterbildungen des erfindungsgemäßen Verfahrens sind in den Ansprüchen 10 bis 16 niedergelegt.

Obwohl die vorliegende Erfindung, wie bereits erwähnt, sämtliche Bearbeitungsvorrichtungen zur Herstellung eines kontinuierlich entlang des Profils verlaufenden Arbeitsergebnisses und sämtliche kontinuierlichen Bearbeitungsverfahren an Profilen umfasst, wie beispielsweise Fräsen, Sprühen, Hobeln, Glühen, Lackieren etc., liegt das besonders bevorzugte Anwendungsgebiet beim Längsverschweißen von Profilen, so dass die Erfindung auch im Folgenden am Beispiel einer Schweißvorrichtung zum Längsverschweißen von Profilen beschrieben werden soll. An dieser Stelle sei jedoch nochmals angemerkt, dass die vorliegende Erfindung nicht auf ein Schweißverfahren und eine Schweißvorrichtung beschränkt ist.

Bei einem zum Längsschweißen von Profilen eingesetzten erfindungsgemäßen Verfahren, welches auch die charakterisierende Funktionsweise der als Schweißvorrichtung verwendeten erfindungsgemäßen Vorrichtung ist, wird die (Ist-)Geschwindigkeit der Relativbewegung zwischen dem Schweißpunkt und dem Profil im Bereich einer (Soll-)Schweißgeschwindigkeit gehalten, die kleiner als die Produktionsgeschwindigkeit des Profils ist. Hierdurch kann eine höhere (Soll-)Produktionsgeschwindigkeit der Profiliermaschine gewählt werden, die sogar über der für ein gutes Schweißergebnis möglichen maximalen Schweißgeschwindigkeit liegt.

Dies wird erfindungsgemäß dadurch erreicht, dass dann, wenn sich das Profil mit einer (Ist-)Profilgeschwindigkeit durch die Schweißvorrichtung bewegt, die größer ist als die Schweißgeschwindigkeit, der Ort des Schweißpunkts mit der Profilbewegung mitbewegt wird, und zwar mit einer Differenzgeschwindigkeit, die der Differenz zwischen der (Ist-)Profilgeschwindigkeit und der (Soll-)Schweißgeschwindigkeit entspricht. Soweit eine Schweißvorrichtung verwendet wird, bei der die Schweißleistung regelbar ist, muss die (Soll-)Schweißgeschwindigkeit nicht konstant gehalten werden. Vorzugsweise ist dies jedoch der Fall, wobei Beschleunigungs- und Abbremsphasen des Profils, solange dessen Geschwindigkeit über der Schweißgeschwindigkeit liegt, durch eine entsprechende schnellere oder langsamere Bewegung des Ortes des Schweißpunkts beantwortet werden, um die Relativgeschwindigkeit konstant zu halten. Da die Wegstrecke, mit der der Ort des Schweißpunkts in Richtung der Profilbewegung bewegt werden kann, nicht endlos ist, kann dann bei vorgegebener maximaler Schweißgeschwindigkeit eine besonders hohe Produktionsgeschwindigkeit gewählt werden, wenn die Intervalle, und damit die Zeitdauern der Produktionsgeschwindigkeit, relativ kurz sind, insbesondere wenn also kurze Profilstücke hergestellt werden sollen.

Die Rückbewegung des Ortes des Schweißpunkts an eine Ausgangsposition erfolgt nun erfindungsgemäß nicht etwa nach einem Abschalten der Schweißleistung, sondern es wird ununterbrochen weitergeschweißt. Denn dann, wenn sich das Profil mit einer Profilgeschwindigkeit durch die Schweißvorrichtung bewegt, die kleiner ist als die Schweißgeschwindigkeit, was auch den Stillstand des Profils einschließt, wird der Ort des Schweißpunkts gegen die Richtung der Profilbewegung bewegt, und zwar wiederum mit einer Differenzgeschwindigkeit, die der Differenz zwischen der Profilgeschwindigkeit und der Schweißgeschwindigkeit entspricht. In denjenigen Phasen eines Intervalls, in denen das Profil also mit einer Profilgeschwindigkeit unterhalb der Schweißgeschwindigkeit durch die Schweißvorrichtung läuft, wird durch die "umgekehrte" Relativbewegung des Ortes des Schweißpunkts zum Profil eine Relativbewegungsgeschwindigkeit aufrecht erhalten, die im Bereich der Soll-Schweißgeschwindigkeit liegt, so dass ohne Unterbrechung weitergeschweißt werden kann. Auch hier soll angemerkt werden, dass diese Schweißgeschwindigkeit nicht notwendigerweise konstant gewählt sein muss; vielmehr ist es beispielsweise möglich, bei der Rückbewegung des Ortes des Schweißpunkts die Schweißleistung herunterzuregeln und dementsprechend eine kleinere Schweißgeschwindigkeit zu benötigen, als bei der umgekehrten Intervallphase, in der die Profilgeschwindigkeit die Schweißgeschwindigkeit übertrifft. Dies kann beispielsweise dann sinnvoll sein, wenn die Stillstandszeiten der Profilbewegung, etwa zum Durchführen eines Stanzvorgangs, länger sind als die Intervallphasen, in denen die Profilgeschwindigkeit die Schweißgeschwindigkeit übertrifft.

Zur Erzielung optimaler Schweißergebnisse sollten die Produktionsgeschwindigkeit, die Wegstrecke, über die der Schweißpunkt in und gegen die Richtung der Profilbewegung bewegt wird, die Schweißgeschwindigkeit und gegebenenfalls die Schweißleistung auf die Stillstandszeiten des Profils während eines Intervalls, auf die in einem Intervall durch die Schweißvorrichtung zu führende Profillänge sowie auf das Beschleunigungs- und Abbremsverhalten der Schweißvorrichtung bzw. der Profilieranlage abgestimmt werden. Je nach Qualitätsanforderungen kann es hierbei sinnvoll sein, die Schweißgeschwindigkeit vorzugeben und hauptsächlich die Produktionsgeschwindigkeit sowie die Wegstrecke der Schweißpunktbewegung an die restlichen Randbedingungen anzupassen, um eine ununterbrochene, kontinuierliche und gleichmäßige Schweißnaht zu erhalten. Vor allem dann, wenn die eingebrachte Schweißleistung regelbar ist, kann es alternativ auch vorteilhaft sein, die Schweißgeschwindigkeit auf eine vorgegebene Produktionsgeschwindigkeit und die anderen Randbedingungen anzupassen, gegebenenfalls anhand einer Kennlinie, die sich bei jedem Intervall wiederholt.

Zweckmäßigerweise wird die Bewegung des Ortes des Schweißpunkts über eine numerisch gesteuerte Achse einer numerischen Schweißvorrichtungssteuerung vorgenommen. Gerade dann, wenn man eine konstante Schweißleistung und somit eine konstante Schweißgeschwindigkeit vorgibt, minimiert sich der Programmieraufwand hierdurch.

Zum Schweißen wird vorzugsweise ein Laser-Schweißkopf oder ein Lichtbogen-Schweißkopf verwendet, wobei der Laser-Schweißkopf den Vorteil bietet, dass der Ort des Schweißpunkts gegebenenfalls mit Spiegeln verändert werden kann, ohne den Schweißkopf selbst bewegen zu müssen.

Um den Steuerungsaufwand minimal zu halten, ist es jedoch bevorzugt, dass der Schweißkopf entlang des Profils bewegbar ausgebildet ist, um den Ort des Schweißpunkts mit der Profilbewegung mitzubewegen oder entgegen dieser Richtung zu bewegen. Denn so ist es möglich, einen starr mit dem Schweißkopf verbundenen Geschwindigkeitssensor, beispielsweise ein Messrad, zur Messung der (momentanen) Geschwindigkeit der Relativbewegung zwischen dem Schweißpunkt und dem Profil zu verwenden, der mit der Schweißvorrichtungssteuerung zusammenwirkt und die Rückführgröße für eine Regelung der Bewegungsgeschwindigkeit des Schweißkopfs liefert. Auf diese Weise kann die Schweißvorrichtung weitgehend unabhängig von einer Profilanlagensteuerung gesteuert bzw. geregelt werden, wobei beispielsweise der Schweißkopf auf einem linear entlang des Profils verfahrbaren Schweißwagen befestigt sein kann.

Ein Ausführungsbeispiel für eine erfindungsgemäß ausgebildete Schweißvorrichtung wird im Folgenden anhand der beigefügten Zeichnungen näher beschrieben und erläutert. Es zeigen:
- Figur 1: eine schematische seitliche Ansicht eines Ausschnitts einer Profilieranlage mit einer in Linie zwischen einer Profiliermaschine und einer Stanzmaschine angeordneten Schweißvorrichtung;
- Figur 2: eine seitliche schematische Detaildarstellung von erfindungswesentlichen Teilen einer Schweißvorrichtung;
- Figur 3: ein Diagramm, in dem die Bewegungsgeschwindigkeiten des Profils und des Schweißkopfs über die Zeit aufgetragen sind.

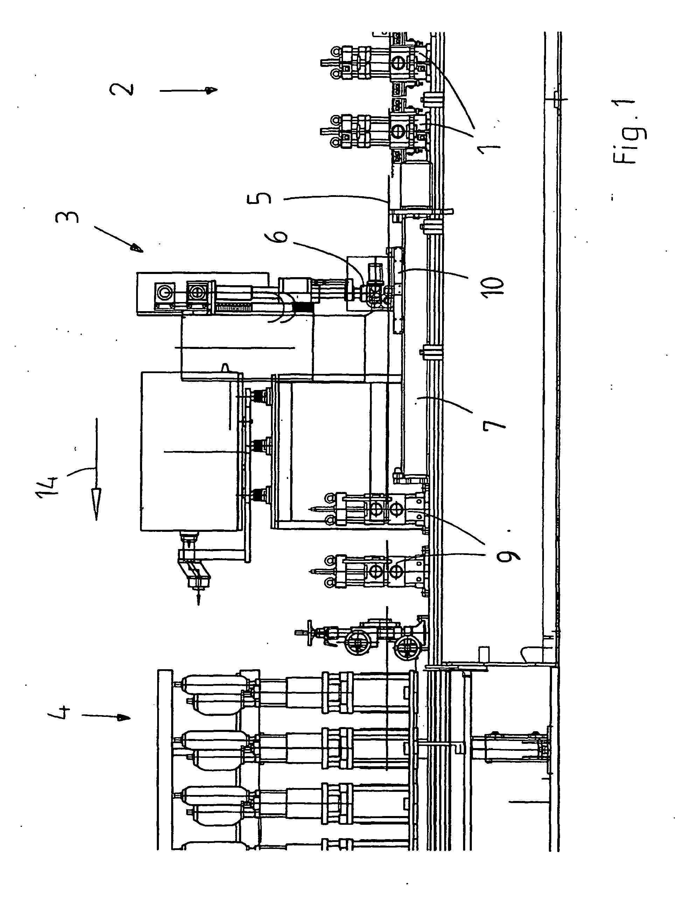

Der in Figur 1 dargestellte Ausschnitt aus einer Profilieranlage zum Umformen eines Metallbandes in ein Profil enthält die zwei letzten Umformstationen 1 mit (hier nicht sichtbaren) Rollformwerkzeugen einer Profiliermaschine 2, eine erfindungsgemäß ausgebildete stationäre Schweißvorrichtung 3 sowie eine Stanzvorrichtung 4 zum Einbringen von Stanzungen in ein von der Profiliermaschine 2 umgeformtes und in der Schweißvorrichtung 3 längs verschweißtes Profil 5. Die Profiliermaschine 2, die Schweißvorrichtung 3 und die Stanzvorrichtung 4 sind in Linie hintereinander angeordnet, so dass das aus einem quasi endlosen Metallband hergestellte Profil 5 ebenso quasi endlos gefertigt wird und erst am Ende der Anlage in einzelne Profilstücke abgelängt werden muss.

Um in der Stanzvorrichtung 4 hochpräzise stanzen zu können, wird der Transport des Profils 5 durch die Anlage in Intervallen bis zum Stillstand abgebremst, so dass während des Stillstands des Profils 5 gestanzt und gegebenenfalls abgelängt werden kann. In der Profiliermaschine 2 sind durch diese Anhaltezeiten keine Probleme zu befürchten, da das Profil 5 zwischen den Rollformwerkzeugen ganz einfach angehalten werden kann. In der Schweißvorrichtung 3 sieht dies jedoch anders aus, da hier ein Schweißkopf 6 kontinuierlich Schweißleistung in das Profil 5 einbringt, um dieses während dessen Bewegung durch die Schweißvorrichtung 3 hindurch längs zu verschweißen. Wird das Profil 5 hier angehalten, oder unterschreitet es eine bestimmte Geschwindigkeit, wird die Schweißleistung, die auf das Profil 5 einwirkt, so groß, dass lokale Zerstörungen des Materials zu befürchten sind, soweit keine erfindungsgemäßen Maßnahmen getroffen werden. Diese Maßnahmen bestehen, wie oben ausführlich beschrieben, hier darin, dass der Schweißkopf 6 entlang eines Maschinentischs 7 mit dem durch die Schweißvorrichtung 3 transportierten Profil 5 mitbewegt oder gegen die Bewegungsrichtung des Profils 5 bewegt werden kann. Zusätzlich kann die Schweißleistung geregelt werden, was erfindungsgemäß allerdings nicht in jedem Fall notwendig ist.

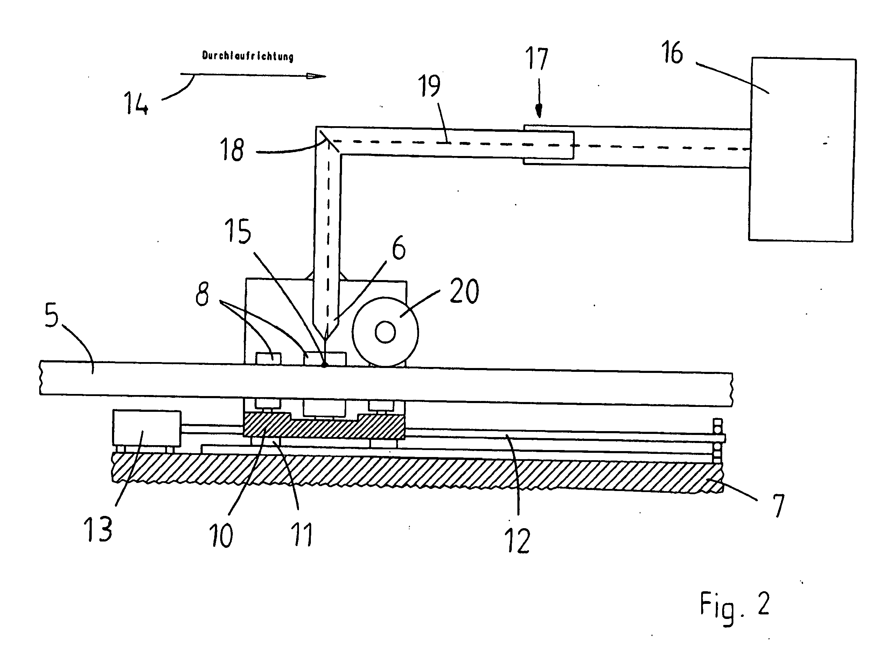

Der Schweißkopf 6 bildet eine mitlaufende Achse in der numerischen Steuerung der Profilieranlage, was nachfolgend anhand von Figur 2 näher erläutert wird. Die Bewegung des Profils 5 durch die Schweißvorrichtung 3 wird durch Führungsrollen 8 sowie mittels zweier Gestelle 9 mit Führungs- bzw. Antriebsrollen unterstützt.

In Figur 2 sind wesentliche Teile der Schweißvorrichtung 3 schematisch dargestellt. Der Schweißkopf 6, der zum Laserschweißen oder zum Lichtbogenschweißen dient, ist an einem Schweißwagen 10 befestigt, welcher seinerseits entlang des Maschinentischs 7 auf einem Führungssystem 11 entlang einer Spindel 12 mittels eines numerisch ansteuerbaren Antriebsmotors 13 entlang einer Bewegungsrichtung 14 des Profils 5 bzw. gegen diese Bewegungsrichtung 14 bewegt werden kann. Ein Hauptrollensatz und zwei Nebenrollensätze von Führungsrollen 8 führen das Profil 5 exakt durch den Schweißwagen 10, um einen auf dem Profil 5 erzeugten Schweißpunkt 15 exakt auf dem Profil zu positionieren.

Die Schweißleistung, die vom Schweißkopf 6 am Schweißpunkt 15 in das Profil 5 eingebracht wird, wird in einer Schweißenergiequelle 16 bereitgestellt und über eine Teleskopführung 17 und eine Umlenkung 18 zum Schweißkopf 6 geleitet. Soweit mit Laserstrahlung geschweißt wird, kann die Umlenkung 18 als Spiegel ausgebildet sein. Beim Lichtbogenschweißen wird zur Übertragung der Schweißleistung von der Schweißenergiequelle 16 auf den Schweißkopf 6 eine Schleppkette 19 verwendet.

Wie anhand dieser Darstellung unmittelbar einleuchtet, entsteht am Schweißpunkt 15 durch den Transport des Profils 5 in Bewegungsrichtung 14 bei kontinuierlichem Schweißen des Schweißkopfs 6 eine Längs-Schweißnaht im Profil 5, wodurch beispielsweise ein Rohr geschlossen werden kann. Solange das Profil 5 mit konstanter Profilgeschwindigkeit durch die Schweißvorrichtung 3 transportiert wird, ergibt sich eine gleichmäßige Schweißnaht. Sobald jedoch die Profilgeschwindigkeit abnimmt und für den vorliegenden intermittierenden Betrieb sogar während der Zeitdauer der Stanzung angehalten wird, nimmt die am Schweißpunkt 15 in das Profil 5 eingebrachte Schweißenergie zu, bis es zur Zerstörung des Materials kommt. Wie eingangs ausführlich beschrieben, kann zwar die Schweißleistung abhängig von der Profilgeschwindigkeit heruntergeregelt werden; jedoch unterhalb einer bestimmten Schweißleistung wird der Schweißvorgang instabil, so dass die Schweißenergiequelle 16 abgeschaltet werden muss. Dies führt im Ergebnis zu Lücken in der Schweißnaht im Profil 5, da bereits kurz vor Erreichen des Stillstands des Profils 5 die Schweißenergiequelle 16 abgeschaltet, und erst eine gewisse Zeit nach dem Wiederanlaufen der Bewegung des Profils 5 die Schweißenergiequelle 16 wieder eingeschaltet wird.

Die in Figur 2 dargestellten Elemente einer erfindungsgemäßen Schweißvorrichtung ermöglichen eine Vermeidung der Lücken in der Schweißnaht, wobei sogar auf eine Regelung der Schweißleistung gegebenenfalls verzichtet werden kann, jedoch nicht muss. Durch die Beweglichkeit des Schweißwagens 10 in und gegen die Bewegungsrichtung 14 des Profils 5 wird eine Schweißbewegung erzeugt, die sich aus der Relativbewegung zwischen dem Schweißwagen 10, also dem Ort des Schweißpunkts 15, und dem Profil 5 ergibt, und deren Geschwindigkeit, je nach Bewegungsrichtung des Schweißwagens 10, höher oder niedriger als die Profilgeschwindigkeit 5 ist. Diese Relativgeschwindigkeit wird hier mittels eines am Schweißwagen 10 angebrachten Messrads 20 fortlaufend gemessen und an die Anlagensteuerung gemeldet. Aufgrund dieses Messrades 20 ist es jedoch nicht unbedingt notwendig, den Antriebsmotor 13 für den Schweißwagen 10 in die Steuerung der Gesamtanlage einzubinden; es ist vielmehr auch denkbar, den Antriebsmotor 13 über eine vom Messrad 20 geregelte, separate Schweißvorrichtungssteuerung zu betreiben.

Figur 2 zeigt eine Phase eines Bewegungsintervalls des Profils 5, in der dieses still steht. Der Antriebsmotor 13 bewegt den Schweißwagen 10, und mit diesem den Ort des Schweißpunkts (der relativ zum Maschinentisch 7 zu verstehen ist), mit Schweißgeschwindigkeit gegen die Bewegungsrichtung 14, so dass der Schweißpunkt 15 sich ebenfalls in Schweißgeschwindigkeit auf dem Profil 5 bewegt und eine Schweißnaht in der gewünschten Qualität herstellt.

Beim Wiederanlaufen des Transports des Profils 5 in Bewegungsrichtung 14 wird dann, proportional zum Anstieg der Profilgeschwindigkeit, die Bewegungsgeschwindigkeit des Schweißwagens 10, und somit die Bewegungsgeschwindigkeit des Ortes des Schweißpunkts 15 relativ zum Maschinentisch 7, proportional zur Beschleunigung des Profils 5 abgebremst, so dass die Relativgeschwindigkeit zwischen dem Ort des Schweißpunkts 15 und dem Profil 5 konstant auf Schweißgeschwindigkeit bleibt - was vom Messrad 20 verifiziert und rückgemeldet wird. An dieser Stelle ist anzumerken, dass die Schweißgeschwindigkeit nicht in jedem Fall konstant sein muss. Dies schon allein dann, wenn die Schweißleistung geschwindigkeitsabhängig geregelt wird.

Bei einem weiteren Beschleunigen des Profils 5 erreicht dessen Geschwindigkeit die Schweißgeschwindigkeit, wobei dann die Bewegung des Schweißwagens 10 zum Stillstand kommt und der Ort des Schweißpunkts 15 bezüglich des Maschinentischs 7 sich nicht mehr verändert. Dies ist jedoch nur für den Zeitpunkt des Erreichens der Schweißgeschwindigkeit der Fall; sobald die Profilgeschwindigkeit die Schweißgeschwindigkeit überschritten hat, kehrt sich die Bewegungsrichtung des Antriebsmotors 13 um, so dass der Schweißwagen 10 dann in Bewegungsrichtung 14 des Profils 5 bewegt wird, um durch die Differenzgeschwindigkeit zwischen dem Schweißwagen 10 und dem Profil 5 eine Geschwindigkeit des Schweißpunkts 15 auf dem Profil 5 zu gewährleisten, die niedriger liegt, als die Profilgeschwindigkeit 5, die sich bis zur Produktionsgeschwindigkeit steigert.

Während der Zeitdauer, in der das Profil 5 in Produktionsgeschwindigkeit durch die Schweißvorrichtung 3 geführt wird, bewegt sich der Schweißwagen 10 in Bewegungsrichtung 14 mit seiner maximalen Geschwindigkeit, bis das Profil 5 für den nächsten Stanzvorgang abgebremst wird. Je kleiner die Profilgeschwindigkeit dann wird, umso langsamer wird der Schweißwagen 10, wobei er mit einer Differenzgeschwindigkeit bewegt wird, die jeweils der Differenz zwischen der Profilgeschwindigkeit und der Schweißgeschwindigkeit entspricht. Hierdurch wird sichergestellt, dass der Schweißpunkt 15 weiterhin mit Schweißgeschwindigkeit auf dem Profil 5 bewegt wird.

Wenn die Profilgeschwindigkeit die Schweißgeschwindigkeit unterschreitet, wird die Bewegungsrichtung des Antriebsmotors 13 wiederum umgedreht, so dass der Schweißwagen 10 dann wieder gegen die Bewegungsrichtung 14 des Profils bewegt wird, wobei die Geschwindigkeit des Schweißwagens 10 und damit des Ortes des Schweißpunkts 15 (bezogen auf den Maschinentisch 7) der Differenz zwischen der Profilgeschwindigkeit und der Schweißgeschwindigkeit entspricht, so dass der Schweißpunkt 15 wiederum mit Schweißgeschwindigkeit auf dem Profil 5 bewegt wird. Wenn und solange das Profil 5 wiederum stillsteht, bewegt sich der Schweißwagen 10 mit Schweißgeschwindigkeit gegen die Bewegungsrichtung 14.

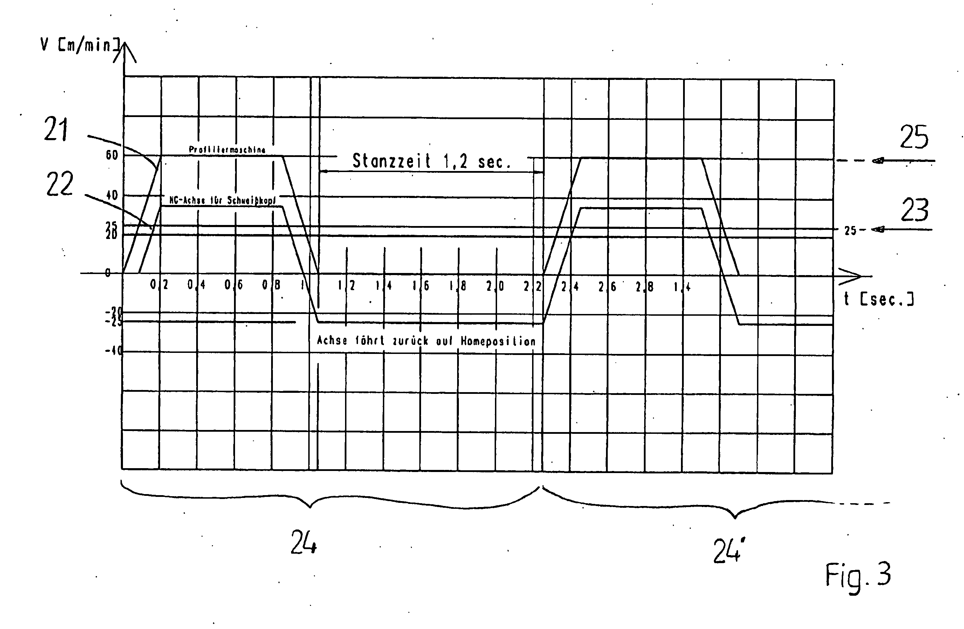

Die Zusammenhänge zwischen der Profilgeschwindigkeit und der Geschwindigkeit des Schweißwagens 10, die jeweils bezogen auf den Maschinentisch 7 sind, werden aus Figur 3 ersichtlich. Hier sind die Profilgeschwindigkeit 21 und die Schweißwagengeschwindigkeit 22 (also die Geschwindigkeit des Ortes des Schweißpunkts 15) über der Zeit aufgetragen, wobei vorliegend eine konstante Schweißgeschwindigkeit 23 von 25 m/min gewählt ist und positive Geschwindigkeitswerte für eine Bewegung in Bewegungsrichtung des Profils stehen. Die Profilgeschwindigkeit 21 verändert sich in einem Intervall 24 von 2,2 Sekunden Länge, ausgehend von einem anfänglichen Stillstand über eine Beschleunigungsphase von 0,2 Sekunden auf eine Produktionsgeschwindigkeit 25 von 60 m/min, hält diese über eine Zeitdauer von ca. 0,62 Sekunden und wird dann wieder bis zum Stillstand abgebremst. Die Stillstandsdauer beträgt für einen Stanzvorgang 1,2 Sekunden, woraufhin das nächste Intervall 24' startet.

Die Differenz zwischen der Profilgeschwindigkeit 21 und der (hier konstanten) Schweißgeschwindigkeit 23 ergibt die Bewegungsgeschwindigkeit 22 des Schweißwagens 10. Diese beginnt also am Beginn des Intervalls 24 mit einem Wert von -25 m/min, wird beim Nulldurchgang bei etwa 0,1 Sekunden in ihrer Richtung umgekehrt, steigt bis zu einer Geschwindigkeit von (60 - 25) m/min an und verharrt dort, solange das Profil 5 mit Produktionsgeschwindigkeit 25 durch die Schweißvorrichtung 3 transportiert wird. Nach dem Anhalten des Profils - die Profilgeschwindigkeit 21 fällt auf Null - wird der Schweißwagen 10 wieder gegen die Bewegungsrichtung 14 des Profils 5 mit einer Geschwindigkeit von -25 m/min zurückgeführt, so dass der Schweißkopf 6 kontinuierlich weiterschweißen kann und beim vorgewählten Betrag einer Schweißgeschwindigkeit von 25 m/min eine durchgehende und exakte Schweißnaht erzeugen kann.

Wie man anhand Figur 3 erkennt, kann das Profil 5 mit einer maximalen Produktionsgeschwindigkeit von 60 m/min durch die Schweißvorrichtung 3 gefahren werden, obwohl zur Herstellung einer qualitativ hochwertigen Schweißnaht hier lediglich 25 m/min Schweißgeschwindigkeit eingestellt wurden. Dies bedeutet eine 2,4fach höhere maximale Produktionsgeschwindigkeit gegenüber den bisher bekannten Schweißvorrichtungen mit gleicher Schweißgeschwindigkeit, die für den intermittierenden Betrieb geeignet sind, und somit beispielsweise bei einer Profil-Teilelänge von 850 mm eine insgesamt um etwa 27% höhere Produktivität, und dies bei einer noch höheren Sicherheit für die Qualität der erzeugten Schweißnaht.

Aus den in Figur 3 dargestellten Werten für die Produktionsgeschwindigkeit 25, die Schweißgeschwindigkeit 23 und die Länge des Intervalls 24 ergibt sich eine in einem Intervall 24 durchgeführte Profil-Teilelänge von 850 mm und eine Wegstrecke für die Bewegung des Schweißwagens 10, also eine Wegstrecke über die der Schweißpunkt 15 in und gegen die Bewegungsrichtung 14 des Profils 5 bewegt wird, von etwas unter 500 mm.

Der Hauptvorteil des erfindungsgemäßen Verfahrens ist also bei der Herstellung von relativ kurzen Profilstücken gegeben, bei denen die durchschnittliche Durchlaufgeschwindigkeit des Profils 5 durch die intermittierend arbeitende Profilieranlage überproportional durch den hohen Zeitanteil des Stillstandes im Intervall 24 reduziert wird.

## Patentansprüche

1. Vorrichtung zum Bearbeiten eines längs durch die Vorrichtung transportierten Profils, mit Transportelementen (8) zum Transport eines Profils (5) durch die Bearbeitungsvorrichtung (3), wobei die Transportelemente (8) so ausgebildet sind, dass die Profilbewegung in Intervallen (24, 24') von einer Produktionsgeschwindigkeit (25) bis zum Stillstand des Profils (5) abgebremst und danach wieder auf die Produktionsgeschwindigkeit beschleunigt wird, und mit mindestens einem Bearbeitungsmittel (6), das an einem Bearbeitungspunkt (15) auf das Profil (5) einwirkt, um mittels einer Relativbewegung zwischen dem Bearbeitungspunkt (15) und dem Profil (5) ein entlang des Profils (5) verlaufendes Arbeitsergebnis herzustellen, wobei das Bearbeitungsmittel (6) so ausgebildet ist, dass der Ort des Bearbeitungspunkts (15), von einer Steuerung gesteuert, entlang der Bewegungsrichtung (14) des Profils (5) vor und zurück bewegbar ist,
**dadurch gekennzeichnet,**
**dass** die Steuerung so ausgebildet ist, dass die Geschwindigkeit der Relativbewegung zwischen dem Bearbeitungspunkt (15) und dem Profil (5) im Bereich einer Bearbeitungsgeschwindigkeit (23) gehalten wird, die kleiner als die Produktionsgeschwindigkeit (25) des Profils (5) ist, wobei dann, wenn sich das Profil (5) mit einer Profilgeschwindigkeit (21) durch die Bearbeitungsvorrichtung (3) bewegt, die größer ist als die Bearbeitungsgeschwindigkeit (23), der Ort des Bearbeitungspunkts (15) mit der Profilbewegung mitbewegt wird, und zwar mit einer Differenzgeschwindigkeit, die der Differenz zwischen der Profilgeschwindigkeit (21) und
der Bearbeitungsgeschwindigkeit (23) entspricht, während dann, wenn sich das Profil (5) mit einer Profilgeschwindigkeit (21) durch die Bearbeitungsvorrichtung (3) bewegt, die kleiner als die Bearbeitungsgeschwindigkeit (23) ist, oder stillsteht, der Ort des Bearbeitungspunkts (15) gegen die Bewegungsrichtung (14) des Profils (5) bewegt wird, und zwar wiederum mit einer Differenzgeschwindigkeit, die der Differenz zwischen der Profilgeschwindigkeit (21) und der Bearbeitungsgeschwindigkeit (23) entspricht.

2. Vorrichtung nach Anspruch 1,
**dadurch gekennzeichnet,**
**dass** die Bearbeitungsgeschwindigkeit (23) im Wesentlichen konstant ist.

3. Vorrichtung nach einem der Ansprüche 1 oder 2,
**dadurch gekennzeichnet,**
**dass** das Bearbeitungsmittel (6) entlang des Profils (5) bewegbar ausgebildet ist, um den Ort des Bearbeitungspunkts (15) mit der Profilbewegung mitzubewegen oder ihn gegen die Profilbewegung zu bewegen.

4. Vorrichtung nach Anspruch 3,
**dadurch gekennzeichnet,**
**dass** ein mit dem Bearbeitungsmittel (6) verbundener Geschwindigkeitssensor (20) zur Messung der Geschwindigkeit der Relativbewegung zwischen dem Bearbeitungspunkt (15) und dem Profil (5) vorhanden ist und mit der Steuerung zusammenwirkt.

5. Vorrichtung nach Anspruch 4,
**dadurch gekennzeichnet,**
**dass** der Sensor ein Messrad (20) ist.

6. Vorrichtung nach mindestens einem der Ansprüche 3 bis 5,
**dadurch gekennzeichnet,**
**dass** das Bearbeitungsmittel (6) auf einem linear entlang des Profils (5) verfahrbaren Wagen (10) befestigt ist.

7. Vorrichtung nach mindestens einem der Ansprüche 1 bis 6,
**dadurch gekennzeichnet,**
**dass** die Bearbeitungsvorrichtung eine Schweißvorrichtung (3) zum Längsverschweißen von Profilen (5) ist, wobei das Bearbeitungsmittel ein Schweißkopf (6), der Bearbeitungspunkt ein Schweißpunkt (15) zum Herstellen einer Schweißnaht auf dem Profil (5) und die Steuerung eine Schweißvorrichtungssteuerung ist.

8. Vorrichtung nach Anspruch 7,
**dadurch gekennzeichnet,**
**dass** der Schweißkopf (6) ein Laser-Schweißkopf oder ein Lichtbogen-Schweißkopf ist.

9. Verfahren zum Längsbearbeiten von Profilen, wobei ein Profil (5), das mit einem entlang des Profils (5) verlaufenden Arbeitsergebnis versehen werden soll, durch eine Bearbeitungsvorrichtung (3) geführt wird, wobei in der Bearbeitungsvorrichtung (3) ein Bearbeitungsmittel (6) an einem Bearbeitungspunkt (15) auf das Profil (5) einwirkt, um mittels einer Relativbewegung zwischen dem Bearbeitungspunkt (15) und dem Profil (5) ein entlang des Profils (5) verlaufendes Arbeitsergebnis herzustellen, und wobei die Profilbewegung in Intervallen (24, 24') von einer Produktionsgeschwindigkeit (25) bis zum Stillstand des Profils (5) abgebremst und danach wieder auf die Produktionsgeschwindigkeit (25) beschleunigt wird,
**dadurch gekennzeichnet,**
**dass** die Geschwindigkeit der Relativbewegung zwischen dem Bearbeitungspunkt (15) und dem Profil (5) im Bereich einer Bearbeitungsgeschwindigkeit (23) gehalten wird, die kleiner als die Produktionsgeschwindigkeit (25) des Profils (5) ist, wobei sich das Profil (5) mit einer Profilgeschwindigkeit (21) durch die Bearbeitungsvorrichtung (3) bewegt, die größer ist als die Bearbeitungsgeschwindigkeit (23), und hierbei der Ort des Bearbeitungspunkts (15) mit der Profilbewegung mitbewegt wird, und zwar mit einer Differenzgeschwindigkeit, die der Differenz zwischen der Profilgeschwindigkeit (21) und der Bearbeitungsgeschwindigkeit (23) entspricht, und danach sich das Profil (5) mit einer Profilgeschwindigkeit (21) durch die Bearbeitungsvorrichtung (3) bewegt, die kleiner als die Bearbeitungsgeschwindigkeit (23) ist, oder stillsteht, und hierbei der Ort des Bearbeitungspunkts (15) gegen die Bewegungsrichtung (14) des Profils (5) bewegt wird, und zwar wiederum mit einer Differenzgeschwindigkeit, die der Differenz zwischen der Profilgeschwindigkeit (21) und der Bearbeitungsgeschwindigkeit (23) entspricht.

10. Verfahren nach Anspruch 9,
**dadurch gekennzeichnet,**
**dass** die Bearbeitungsgeschwindigkeit (23) im Wesentlichen konstant gehalten wird.

11. Verfahren nach einem der Ansprüche 9 oder 10,
**dadurch gekennzeichnet,**
**dass** die Bearbeitungsgeschwindigkeit (23) und die Wegstrecke, über die der Bearbeitungspunkt (15) in und gegen die Bewegungsrichtung (14) des Profils (5) bewegt wird, auf die Stillstandszeiten des Profils (5) während eines Intervalls (24), auf die in einem Intervall (24) durch die Bearbeitungsvorrichtung (3) zu führende Profillänge sowie auf eine vorgewählte Produktionsgeschwindigkeit (25) abgestimmt werden, so dass sich ein gleichmäßiges, ununterbrochenes Arbeitsergebnis ergibt.

12. Verfahren nach einem der Ansprüche 9 oder 10,
**dadurch gekennzeichnet,**
**dass** die Produktionsgeschwindigkeit (25) und die Wegstrecke, über die der Bearbeitungspunkt (15) in und gegen die Bewegungsrichtung (14) des Profils (5) bewegt wird, auf die Stillstandszeiten des Profils (5) während eines Intervalls (24), auf die in einem Intervall (24) durch die Bearbeitungsvorrichtung (3) zu führende Profillänge sowie auf eine vorgewählte Bearbeitungsgeschwindigkeit (23) abgestimmt werden, so dass sich ein gleichmäßiges, ununterbrochene Arbeitsergebnis ergibt.

13. Verfahren nach mindestens einem der Ansprüche 9 bis 12,
**dadurch gekennzeichnet,**
**dass** die Bewegung des Ortes des Bearbeitungspunkts (15) über eine numerisch gesteuerte Achse einer numerischen Steuerung erfolgt.

14. Verfahren nach mindestens einem der Ansprüche 9 bis 13,
**dadurch gekennzeichnet,**
**dass** die Geschwindigkeit der Relativbewegung zwischen dem Bearbeitungspunkt (15) und dem Profil (5) laufend gemessen und als Regelgröße für die Bewegung des Ortes des Bearbeitungspunktes (15) verwendet wird.

15. Verfahren nach mindestens einem der Ansprüche 9 bis 14,
**dadurch gekennzeichnet,**
**dass** es zum Längsverschweißen von Profilen eingesetzt wird, wobei als Bearbeitungsvorrichtung eine Schweißvorrichtung (3) verwendet und als kontinuierlich entlang des Profils (5) verlaufendes Arbeitsergebnis eine Schweißnaht hergestellt wird, die mittels einer Relativbewegung zwischen einem als Bearbeitungspunkt dienenden Schweißpunkt (15) und dem Profil (5) erzeugt wird.

16. Verfahren nach Anpruch 15,
**dadurch gekennzeichnet,**
**dass** zum Erzeugen des Schweißpunkts (15) ein Laser oder ein Lichtbogen-Schweißverfahren verwendet wird.

## Claims

1. Device for processing a profile that is transported lengthwise through the device, having transport elements (8) for transporting a profile (5) through the processing device (3), the transport elements (8) being so constructed that the movement of the profile is at intervals (24, 24') slowed down from a production speed (25) until the profile (5) is stationary and then accelerated to the production speed again, and having at least one processing means (6) which acts on the profile (5) at a processing point (15) in order by means of a relative movement between the processing point (15) and the profile (5) to produce a work result running along the profile (5), the processing means (6) being so constructed that the location of the processing point (15), controlled by a controller, is movable back and forth along the direction of movement (14) of the profile (5),
**characterised in that**
the controller is so constructed that the speed of relative movement between the processing point (15) and the profile (5) is maintained in the region of a processing speed (23) that is lower than the production speed (25) of the profile (5), wherein when the profile (5) moves through the processing device (3) at a profile speed (21) that is higher than the processing speed (23), the location of the processing point (15) is moved together with the movement of the profile, this being effected at a differential speed corresponding to the difference between the profile speed (21) and the processing speed (23), whereas when the profile (5) moves through the processing device (3) at a profile speed (21) that is lower than the processing speed (23), or is stationary, the location of the processing point (15) is moved opposite to the direction of movement (14) of the profile (5), this again being effected at a differential speed corresponding to the difference between the profile speed (21) and the processing speed (23).

2. Device according to claim 1,
**characterised in that**
the processing speed (23) is substantially constant.

3. Device according to either one of claims 1 and 2,
**characterised in that**
the processing means (6) is constructed so as to be movable along the profile (5) in order to move the location of the processing point (15) together with the movement of the profile or opposite to the movement of the profile.

4. Device according to claim 3,
**characterised in that**
a speed sensor (20), connected to the processing means (6), is provided for measuring the speed of relative movement between the processing point (15) and the profile (5) and co-operates with the controller.

5. Device according to claim 4,
**characterised in that**
the sensor is a measuring wheel (20).

6. Device according to at least one of claims 3 to 5,
**characterised in that**
the processing means (6) is mounted on a carriage (10) which is movable linearly along the profile (5).

7. Device according to at least one of claims 1 to 6,
**characterised in that**
the processing device is a welding device (3) for the longitudinal welding of profiles (5), the processing means being a welding head (6), the processing point being a welding point (15) for producing a welded seam on the profile (5) and the controller being a welding device controller.

8. Device according to claim 7,
**characterised in that**
the welding head (6) is a laser welding head or an arc welding head.

9. Method for the longitudinal processing of profiles, wherein a profile (5) that is to be provided with a work result running along the profile (5) is guided through a processing device (3), wherein in the processing device (3) a processing means (6) acts on the profile (5) at a processing point (15) in order by means of a relative movement between the processing point (15) and the profile (5) to produce a work result running along the profile (5), and wherein the movement of the profile is at intervals (24, 24') slowed down from a production speed (25) until the profile (5) is stationary and then accelerated to the production speed (25) again,
**characterised in that**
the speed of relative movement between the processing point (15) and the profile (5) is maintained in the region of a processing speed (23) that is lower than the production speed (25) of the profile (5), wherein the profile (5) moves through the processing device (3) at a profile speed (21) that is higher than the processing speed (23), the location of the processing point (15) is moved together with the movement of the profile, this being effected at a differential speed corresponding to the difference between the profile speed (21) and the processing speed (23), and then the profile (5) moves through the processing device (3) at a profile speed (21) that is lower than the processing speed (23), or is stationary, the location of the processing point (15) is moved opposite to the direction of movement (14) of the profile (5), this again being effected at a differential speed corresponding to the difference between the profile speed (21) and the processing speed (23).

10. Method according to claim 9,
**characterised in that**
the processing speed (23) is kept substantially constant.

11. Method according to either one of claims 9 and 10,
**characterised in that**
the processing speed (23) and the distance over which the processing point (15) is moved in the same direction as and in opposite direction to the direction of movement (14) of the profile (5) are matched to the stationary periods of the profile (5) during an interval (24), to the length of profile to be guided through the processing device (3) in an interval (24) and to a preselected production speed (25), so that a uniform, uninterrupted work result is obtained.

12. Method according to either one of claims 9 and 10,
**characterised in that**
the production speed (25) and the distance over which the processing point (15) is moved in the same direction as and in opposite direction to the direction of movement (14) of the profile (5) are matched to the stationary periods of the profile (5) during an interval (24), to the length of profile to be guided through the processing device (3) in an interval (24) and to a preselected processing speed (23), so that a uniform, uninterrupted work result is obtained.

13. Method according to at least one of claims 9 to 12,
**characterised in that**
the movement of the location of the processing point (15) is effected by means of a numerically controlled shaft of a numerical controller.

14. Method according to at least one of claims 9 to 13,
**characterised in that**
the speed of relative movement between the processing point (15) and the profile (5) is continuously measured and used as control variable for the movement of the location of the processing point (15).

15. Method according to at least one of claims 9 to 14,
**characterised in that**
it is used for the longitudinal welding of profiles, wherein a welding device (3) is used as the processing device and a welded seam is produced as the work result running continuously along the profile (5), the welded seam being produced by means of a relative movement between a welding point (15) serving as processing point and the profile (5).

16. Method according to claim 15,
**characterised in that**
a laser or an arc welding process is used for producing the welding point (15).

## Revendications

1. Dispositif d'usinage d'un profilé acheminé longitudinalement à travers ledit dispositif, comprenant des éléments de transport (8) affectés à l'acheminement d'un profilé (5) à travers le dispositif d'usinage (3), lesdits éléments de transport (8) étant réalisés de façon telle que le mouvement du profilé soit freiné, par intervalles (24, 24'), pour passer d'une vitesse de production (25) à l'immobilisation dudit profilé (5), puis accéléré de nouveau jusqu'à ladite vitesse de production ; et au moins un moyen d'usinage (6) agissant sur le profilé (5) en un point d'usinage (15) afin de produire, par un mouvement relatif s'opérant entre ledit point d'usinage (15) et ledit profilé (5), un résultat d'intervention s'étendant le long dudit profilé (5), sachant que ledit moyen d'usinage (6) est conçu de telle sorte que le site dudit point d'usinage (15) puisse accomplir des mouvements d'avance et de recul, pilotés par une commande, le long de la direction (14) du mouvement dudit profilé (5),
**caractérisé par le fait**
**que** la commande est réalisée de manière que la vitesse du mouvement relatif, s'opérant entre le point d'usinage (15) et le profilé (5), soit maintenue dans la région d'une vitesse d'usinage (23) inférieure à la vitesse de production (25) dudit profilé (5), sachant que, lorsque ledit profilé (5) se meut à travers le dispositif d'usinage (3) à une vitesse (21) supérieure à ladite vitesse d'usinage (23), le site dudit point d'usinage (15) accompagne ledit mouvement du profilé, plus précisément à une vitesse différentielle qui correspond à la différence entre ladite vitesse (21) du profilé et ladite vitesse d'usinage (23) ; tandis que, lorsque ledit profilé (5) se meut à travers ledit dispositif d'usinage (3) à une vitesse (21) inférieure à ladite vitesse d'usinage (23), voire s'immobilise, ledit site du point d'usinage (15) se meut en sens inverse de la direction (14) du mouvement dudit profilé (5), plus précisément, là encore, à une vitesse différentielle qui correspond à ladite différence entre la vitesse (21) du profilé et la vitesse d'usinage (23).

2. Dispositif selon la revendication 1,
**caractérisé par le fait**
**que** la vitesse d'usinage (23) est pour l'essentiel constante.

3. Dispositif selon l'une des revendications 1 ou 2,
**caractérisé par le fait**
**que** le moyen d'usinage (6) est doué de mobilité le long du profilé (5), de façon telle que le site du point d'usinage (15) accompagne le mouvement dudit profilé, ou soit mû en sens inverse dudit mouvement du profilé.

4. Dispositif selon la revendication 3,
**caractérisé par le fait**
**qu'**un capteur (20) de vitesses, conçu pour mesurer la vitesse du mouvement relatif entre le point d'usinage (15) et le profilé (5), est raccordé au moyen d'usinage (6) et coopère avec la commande.

5. Dispositif selon la revendication 4,
**caractérisé par le fait**
**que** le capteur est une roue mesureuse (20).

6. Dispositif selon au moins l'une des revendications 3 à 5,
**caractérisé par le fait**
**que** le moyen d'usinage (6) est fixé sur un chariot (10) déplaçable linéairement le long du profilé (5).

7. Dispositif selon au moins l'une des revendications 1 à 6,
**caractérisé par le fait**
**que** ledit dispositif d'usinage est un dispositif de soudage (3) dévolu au soudage longitudinal de profilés (5), sachant que le moyen d'usinage est une tête de soudage (6),
**que** le point d'usinage est un point de soudage (15) conçu pour ménager un cordon de soudure sur le profilé (5), et que la commande est une commande dudit dispositif de soudage.

8. Dispositif selon la revendication 7,
**caractérisé par le fait**
**que** la tête de soudage (6) est une tête de soudage au laser, ou une tête de soudage à l'arc.

9. Procédé d'usinage longitudinal de profilés dans lequel un profilé (5), devant être pourvu d'un résultat d'intervention s'étendant le long dudit profilé (5), est guidé à travers un dispositif d'usinage (3), sachant qu'un moyen d'usinage (6) agit sur ledit profilé (5) en un point d'usinage (15), dans ledit dispositif d'usinage (3), de manière à produire un résultat d'intervention s'étendant le long dudit profilé (5), par un mouvement relatif s'opérant entre ledit point d'usinage (15) et ledit profilé (5) ; et sachant que le mouvement du profilé est freiné, par intervalles (24, 24'), pour passer d'une vitesse de production (25) à l'immobilisation dudit profilé (5), puis accéléré de nouveau jusqu'à ladite vitesse de production (25),
**caractérisé par le fait**
**que** la vitesse du mouvement relatif, s'opérant entre le point d'usinage (15) et le profilé (5), est maintenue dans la région d'une vitesse d'usinage (23) inférieure à la vitesse de production (25) dudit profilé (5), sachant que ledit profilé (5) se meut à travers le dispositif d'usinage (3) à une vitesse (21) supérieure à ladite vitesse d'usinage (23), le site dudit point d'usinage (15) accompagnant ledit mouvement du profilé, plus précisément à une vitesse différentielle qui correspond à la différence entre ladite vitesse (21) du profilé et ladite vitesse d'usinage (23) ; puis ledit profilé (5) se meut à travers ledit dispositif d'usinage (3) à une vitesse (21) inférieure à ladite vitesse d'usinage (23), voire s'immobilise, ledit site du point d'usinage (15) se mouvant en sens inverse de la direction (14) du mouvement dudit profilé (5), plus précisément, là encore, à une vitesse différentielle qui correspond à ladite différence entre la vitesse (21) du profilé et la vitesse d'usinage (23).

10. Procédé selon la revendication 9,
**caractérisé par le fait**
**que** la vitesse d'usinage (23) est maintenue pour l'essentiel constante.

11. Procédé selon l'une des revendications 9 ou 10,
**caractérisé par le fait**
**que** la vitesse d'usinage (23) et le trajet suivant lequel le point d'usinage (15) est mû dans la direction (14) du mouvement du profilé (5), et en sens inverse, sont coordonnés avec les temps d'immobilisation dudit profilé (5) durant un intervalle (24), avec la longueur dudit profilé devant être guidée à travers le dispositif d'usinage (3) durant un intervalle (24), ainsi qu'avec une vitesse de production (25) présélectionnée, de manière à obtenir un résultat d'intervention uniforme et ininterrompu.

12. Procédé selon l'une des revendications 9 ou 10,
**caractérisé par le fait**
**que** la vitesse de production (25) et le trajet suivant lequel le point d'usinage (15) est mû dans la direction (14) du mouvement du profilé (5), et en sens inverse, sont coordonnés avec les temps d'immobilisation dudit profilé (5) durant un intervalle (24), avec la longueur dudit profilé devant être guidée à travers le dispositif d'usinage (3) durant un intervalle (24), ainsi qu'avec une vitesse d'usinage (23) présélectionnée, de manière à obtenir un résultat d'intervention uniforme et ininterrompu.

13. Procédé selon au moins l'une des revendications 9 à 12,
**caractérisé par le fait**
**que** le mouvement du site du point d'usinage (15) s'opère par l'intermédiaire d'un axe d'une commande numérique, piloté numériquement.

14. Procédé selon au moins l'une des revendications 9 à 13,
**caractérisé par le fait**
**que** la vitesse du mouvement relatif, s'opérant entre le point d'usinage (15) et le profilé (5), est mesurée en continu et est utilisée en tant que grandeur de régulation dédiée au mouvement du site dudit point d'usinage (15).

15. Procédé selon au moins l'une des revendications 9 à 14,
**caractérisé par le fait**
**qu'**il est mis en oeuvre pour le soudage longitudinal de profilés, un dispositif de soudage (3) étant utilisé en tant que dispositif d'usinage et un cordon de soudure, produit par un mouvement relatif entre le profilé (5) et un point de soudage (15) faisant fonction de point d'usinage, étant ménagé en tant que résultat d'intervention s'étendant en continu le long dudit profilé (5).

16. Procédé selon la revendication 15,
**caractérisé par le fait**
**qu'**un procédé de soudage au laser, ou de soudage à l'arc, est appliqué pour produire le point de soudage (15).
